# EUROPÄISCHE PATENTSCHRIFT

(11) **EP 2 494 526 B1**
(45) Veröffentlichungstag und Bekanntmachung des Hinweises auf die Patenterteilung: **14.05.2014**
(21) Anmeldenummer: 10771078.2
(22) Anmeldetag: 18.10.2010
(51) Int. Cl.: G06F 21/57, G05B 19/042, G07C 5/08, H04L 9/32

(54) **VERFAHREN ZUM BETREIBEN EINES TACHOGRAPHEN UND TACHOGRAPH**
METHOD FOR OPERATING A TACHOGRAPH AND TACHOGRAPH
PROCÉDÉ PERMETTANT DE FAIRE FONCTIONNER UN TACHOGRAPHE, ET TACHOGRAPHE CORRESPONDANT

(30) Priorität: 30.10.2009 DE 102009051350
(43) Veröffentlichungstag der Anmeldung: 05.09.2012
(73) Patentinhaber: Continental Automotive GmbH, 30165 Hannover (DE)
(72) Erfinder: HOFFMANN, Klaus, 78050 Villingen-Schwenningen (DE); LINDINGER, Andreas, 78658 Flözlingen (DE)
(86) Internationale Anmeldenummer: PCT/EP2010/065605
(87) Internationale Veröffentlichungsnummer: WO 2011/051128

(56) Entgegenhaltungen:
- DE-A1- 10 008 974
- DE-A1-102007 004 645
- DE-A1-102007 058 163
- US-A- 5 956 408
- US-A1- 2007 028 120

## Beschreibung

Die Erfindung betrifft ein Verfahren zum Betreiben eines Tachographen und einen Tachograph mit einem Applikationscontroller und einem Sicherheitscontroller.

Fahrtenschreiber oder Tachographen können Kontrollgeräte sein, die dafür vorgesehen sind, in einem Kraftfahrzeug, insbesondere in einem Güter- oder Fahrgäste-Transportfahrzeug, installiert zu werden, um eine Überwachung der Aktivitäten eines Fahrers und/oder Beifahrers des Fahrzeugs zu ermöglichen.

WO 2006/053998 A1 beschreibt beispielsweise einen Tachographen mit einem Sicherheitskontroller und einem separaten Applikationskontroller zur Überwachung der Aktivitäten eines Fahrers und eines Beifahrers.

US 5,956,408 A offenbart ein Verfahren, bei dem Daten mit einem Öffentlichem-Schlüssel-Verschlüsselungssystem mittels eines privaten Schlüssels eines Datensenders verschlüsselt werden. Zusätzlich werden die Daten signiert. Ein Empfänger entschlüsselt diese Daten und verifiziert die digitale Signatur.

Die Erfindung hat es sich zur Aufgabe gemacht, ein Verfahren zum Betreiben eines Tachographen und einen Tachograph zu schaffen, das bzw. der den hohen Anforderungen an die Manipulationssicherheit gerecht wird und möglichst zuverlässig ist.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus durch ein Verfahren zum Betreiben eines Tachographen und einem korrespondierenden Tachograph mit einem Applikationscontroller und einem Sicherheitscontroller. Dem Applikationscontroller ist ein Speicher zugeordnet, in dem ein von dem Applikationscontroller ausführbares Programm gespeichert ist. Dem Sicherheitscontroller ist ein weiterer Speicher zugeordnet, in dem ein von dem Sicherheitscontroller ausführbares weiteres Programm gespeichert ist. Der Applikationscontroller steht mit dem Sicherheitscontroller in Verbindung. Dabei wird ein verschlüsselter Programmkode mit zumindest einer zugeordneten Signatur dem Sicherheitscontroller zur Verfügung gestellt. Mittels des Sicherheitscontrollers wird der verschlüsselte Programmkode entschlüsselt und mittels der zumindest einen Signatur verifiziert. Es wird detektiert, ob der entschlüsselte Programmkode für den Applikationscontroller und/oder für den Sicherheitscontroller bestimmt ist. Abhängig von der Detektierung werden das Programm in dem Speicher und/oder das weitere Programm in dem weiteren Speicher durch den entschlüsselten Programmkode zumindest teilweise ersetzt. Abhängig von einem Ergebnis der Verifikation wird das zumindest teilweise ersetzte Programm und/oder das zumindest teilweise ersetzte weitere Programm zur Ausführung freigegeben.

Dies ermöglicht auch bei manipulationsgesicherten Tachographen eine Aktualisierung eines ausführbaren Programms für den Applikationscontroller und/oder Sicherheitscontroller auszuführen. Die Vorteile eines Tachographen mit einer derartigen Architektur des Sicherheitscontrollers und das Zusammenwirken mit einem Applikationscontroller bestehen vor allem in der weitgehenden Integration von Sicherheitsfunktionen in dem Sicherheitscontroller.

Der Programmkode kann einen Teil des jeweiligen ausführbaren Programms oder das komplette jeweilige ausführbare Programm umfassen. Ein ausführbares Programm ist dahingehend zu verstehen, dass es von einem Prozessor des jeweiligen Controllers als eine Folge von Befehlen interpretierbar und somit ausführbar ist und ein oder mehrere Funktionen des Tachographen realisiert. Demgegenüber repräsentieren Daten keine interpretierbare Folge von Befehlen. Daten können während einer Ausführung eines vorgegebenen Befehls verwendet werden. Vorzugsweise werden Daten durch das jeweilige Programm verarbeitet.

Die zumindest eine Signatur kann zur Verifikation des entschlüsselten Programmkodes dienen oder zur Verifikation des verschlüsselten Programmkodes.

Der Programmkode kann dem Sicherheitscontroller auch in nichtverschlüsselter Form bereitgestellt werden, wobei der Sicherheitscontroller dann vorzugsweise keine Entschlüsselung mehr ausführt, sondern lediglich die Verifikation. Der nichtverschlüsselte Programmkode entspricht dann dem entschlüsselten Programmkode. Auch eine Bereitstellung von teilweise verschlüsseltem Programmkode ist möglich.

In dem weiteren Speicher, der auch von dem Sicherheitscontrollers umfasst sein kann, sind neben dem weiteren Programm beispielsweise kryptologische Schlüssel gespeichert mittels derer die Verschlüsselungseinheit Fahrzeugsbetriebsdaten verschlüsselt und/oder signiert. Das weitere Programm und die kryptologischen Schlüssel sind vorzugsweise manipulationsgesichert und vor unbefugtem Zugriff geschützt abgespeichert in dem weiteren Speicher.

Die Verifikation mittels der Signatur kann eine Überprüfung einer Integrität des verschlüsselten oder entschlüsselten Programmkodes umfassen, d.h. eine Überprüfung der Unversehrtheit und Unverändertheit des Programmkodes. Alternativ oder zusätzlich kann mittels der Verifikation auch eine Urheberschaft des verschlüsselten oder entschlüsselten Programmkodes überprüft werden. Dabei kann der Programmkode nur eine Signatur oder auch mehrere Signaturen umfassen, die beispielsweise vorgegebenen Abschnitten des Programmkodes zugeordnet sind und eine Verifikation nur dieser vorgegebenen Abschnitte ermöglichen. Dazu können symmetrische und/oder asymmetrische Signaturverfahren verwendet werden, so z.B. RSA-, MD5- und/oder SHA-Verfahren.

In einer vorteilhaften Ausgestaltung wird mittels des Sicherheitscontrollers eine Quelle des verschlüsselten Programmkodes identifiziert und/oder authentifiziert. Abhängig von der Identifizierung und/oder Authentifizierung wird der verschlüsselte Programmkode dem Sicherheitscontroller bereitgestellt. Dadurch kann schon vor der Bereitstellung des verschlüsselten Programmkodes festgestellt werden, ob die Quelle vertrauenswürdig ist. Die Quelle repräsentiert vorzugsweise ein separates und externes Gerät und kann beispielsweise ein Diagnosegerät oder Computer sein und mittels einer drahtgebundenen oder drahtlosen Verbindung mit dem Tachographen kommunizieren.

In einer weiteren vorteilhaften Ausgestaltung wird der entschlüsselte Programmkode in dem Applikationscontroller und/oder dem Sicherheitscontroller zwischengespeichert. Das Programm in dem Speicher und/oder das weitere Programm in dem weiteren Speicher werden durch den zwischengespeicherten entschlüsselten Programmkode ersetzt, wenn die Verifikation erfolgreich ist. Vorzugsweise wird der komplette Programmkode zwischengespeichert. Dies ermöglicht eine besonders sichere Aktualisierung des jeweiligen Programms. Bei erfolgloser Verifikation wird das jeweilige Programm vorzugsweise nicht ersetzt, sondern das bisherige Programm weiter ausgeführt. Somit steht die volle bisherige Funktionalität des Tachographen auch nach einer erfolglosen Aktualisierung dem Benutzer zur Verfügung.

In einer weiteren vorteilhaften Ausgestaltung wird der verschlüsselte Programmkode paketweise mittels des Sicherheitscontrollers entschlüsselt. Das Programm in dem Speicher und/oder das weitere Programm in dem weiteren Speicher werden paketweise durch den entsprechenden paketweise entschlüsselten Programmkode ersetzt. Das zumindest teilweise ersetzte Programm und/oder das zumindest teilweise ersetzte weitere Programm werden zur Ausführung freigegeben, wenn die Verifikation erfolgreich ist. Dies erlaubt einen besonders geringen Speicherbedarf in dem jeweiligen Controller und zugleich eine besonders schnelle Aktualisierung des jeweiligen Programms.

Ausführungsbeispiele der Erfindung sind im Folgenden anhand der schematischen Zeichnungen näher erläutert. Es zeigen:
- Fig. 1: eine schematische Darstellung eines Tachographen,
- Fig. 2: ein Flussdiagramm.

Elemente gleicher Konstruktion oder Funktion sind figurenübergreifend mit den gleichen Bezugszeichen versehen.

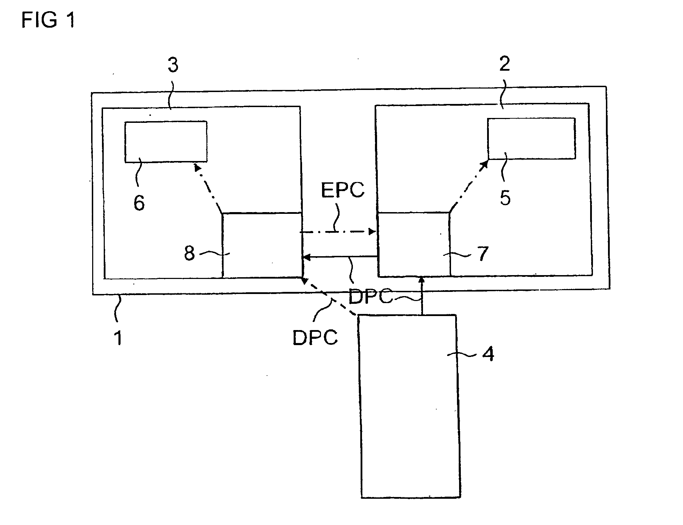

Fig. 1 zeigt eine schematische Darstellung eines Tachographen 1, der einen Applikationscontroller 2 und einen Sicherheitscontroller 3 umfasst.

Der Applikationscontroller 2 weist eine Schnittstelle 7 und einen Speicher 5 auf, der beispielsweise als nichtflüchtiger Speicher, so z.B. als Flash Speicher, batteriegepuffertes SRAM oder FRAM ausgebildet ist. In dem Speicher 5 ist ein Programm, insbesondere Applikationsprogramm, gespeichert, das von einem Prozessor des Applikationscontrollers 2 ausführbar ist. Mittels des Programms können die Hauptfunktionen des Tachographen 1 realisiert werden. Neben dem Programm können auch Kommunikationsprogramme in dem Speicher 5 gespeichert sein, die eine Kommunikation mit dem Sicherheitscontroller 3 und/oder mit externen Geräten mittels der Schnittstelle 7 ermöglichen. Ferner können in dem Speicher 5 auch Speicherverwaltungsprogramme gespeichert sein, die ein Löschen, Verwalten und/oder Neuprogrammieren des Speichers 5 ermöglichen. Darüber hinaus können auch Daten, so z.B. Fahrzeug- und/oder Fahrerdaten, in dem Speicher 5 gespeichert sein. Vorzugsweise ist der Applikationscontroller 2 ausgebildet, nur das Programm in dem Speicher 5 zumindest teilweise durch einen entsprechenden entschlüsselten Programmkode EPC zu ersetzen.

Der Sicherheitscontroller 3 weist eine weitere Schnittstelle 8 und einen weiteren Speicher 6 auf, der beispielsweise auch als nichtflüchtiger Speicher, so z.B. als Flash oder EEPROM Speicher, ausgebildet ist. In dem weiteren Speicher 6 ist ein weiteres Programm gespeichert, das von einem weiteren Prozessor des Sicherheitscontrollers 3 ausführbar ist. Mittels des weiteren Programms können die Sicherheitsfunktionen des Tachographen 1 realisieren werden. Dazu können neben dem weiteren Programm auch kryptologische Funktionen und kryptologische Daten, so z.B. kryptologische Schlüssel, in dem weiteren Speicher 6 gespeichert sein. Ferner können die dem Sicherheitscontroller 3 zugeordneten Daten und Programme auch verschlüsselt in dem weiteren Speicher 6 gespeichert sein. Beispielsweise ist der Sicherheitscontroller 3 als Controller ausgebildet, der auch in Chip-Karten Verwendung findet und für eine Ausführung kryptologischer Operationen optimiert ist. Das weitere Programm umfasst vorzugsweise keine kryptologischen Rechenoperationen, sondern diese werden beispielsweise nur durch die kryptologischen Funktionen zur Verfügung gestellt, die beispielsweise durch das weitere Programm aufgerufen werden. Darüber hinaus können Speicherverwaltungsprogramme für den weiteren Speicher 6 und Kommunikationsprogramme in dem weiteren Speicher 6 gespeichert sein. Vorzugsweise ist der Sicherheitscontroller 3 ausgebildet, nur das weitere Programm in dem weiteren Speicher 6 zumindest teilweise durch einen entsprechenden entschlüsselten Programmkode EPC zu ersetzen.

Die Schnittstelle 7 ist mit der weiteren Schnittstelle 8 elektrisch gekoppelt, so dass eine Kommunikation zwischen dem Applikationscontroller 2 und dem Sicherheitscontroller 3 möglich ist. Die Kommunikation zwischen beiden Controllern 2, 3 kann beispielsweise seriell und/oder parallel ausgebildet sein und im Sinne einer Master-Slave-Kommunikation erfolgen. Dabei repräsentiert der Applikationscontroller 2 beispielsweise den "Master"-Controller und der-Sicherheitscontroller 3 repräsentiert den "Slave"-Controller. Darüber hinaus kann der Applikationscontroller 2 auch ausgebildet sein, mittels der Schnittstelle 7 mit einem externen Gerät 4 gekoppelt zu werden und mit diesem zu kommunizieren. Zusätzlich kann der Applikationscontroller 2 zur Kommunikation mit dem externen Gerät 4 auch eine weitere Schnittstelle aufweisen.

Die Kommunikation mit dem externen Gerät 4 kann drahtgebunden und seriell und/oder parallel erfolgen. Auch eine drahtlose Kommunikation zwischen dem Applikationscontroller 2 und dem externen Gerät 4 oder zwischen dem Sicherheitskontroller 3 und dem externen Gerät 4 wäre möglich.

Mittels des externen Gerätes 4, welches beispielsweise als Diagnosegerät oder als tragbarer Computer ausgebildet ist, kann dem Applikationscontroller 2 ein verschlüsselter und mit einer Signatur umfassender Programmkode DPC an der Schnittstelle 7 zur Verfügung gestellt werden. Der verschlüsselte Programmkode DPC umfasst einen Programmkode, der das aktuelle Programm in dem Speicher 5 oder das aktuelle weitere Programm in dem weiteren Speicher 6 im Rahmen einer Software-Aktualisierung ersetzen soll. Da der Applikationscontroller 2 nicht ausgebildet ist, kryptologische Rechenoperationen auszuführen, kann der zur Verfügung gestellte verschlüsselte Programmkode DPC nicht von dem Prozessor des Applikationscontrollers 2 direkt interpretiert werden. Deshalb ist der Applikationscontroller 2 ausgebildet, den verschlüsselten Programmkode DPC zu erkennen, so z.B. anhand von Kopfdaten, die dem verschlüsselten Programmkode DPC zugeordnet und beispielsweise unverschlüsselt sind, und an den Sicherheitscontroller 3 insbesondere unverändert weiterzuleiten.

Der Sicherheitscontroller 3 ist ausgebildet, den verschlüsselten Programmkode DPC zu empfangen und zu entschlüsseln und den Programmkode mittels der zugeordneten Signatur auf Integrität und/oder Authentizität zu überprüfen. Dazu kann der Sicherheitscontroller 3 den verschlüsselten Programmkode DPC paketweise entschlüsseln, so z.B. byte- oder datenwortweise. Ferner ist der Sicherheitscontroller 3 ausgebildet, zu detektieren, ob der entschlüsselte Programmkode EPC für den Applikationscontroller 2 und/oder für den Sicherheitscontroller 3 bestimmt ist. Danach kann abhängig von der Detektierung der entschlüsselte Programmkode EPC paketweise an den Applikationscontroller 2 übertragen oder das weitere Programm in dem weiteren Speicher 6 paketweise durch den paketweise entschlüsselten Programmkode EPC ersetzt werden.

Die Schnittstellen 7, 8 sind beispielsweise als SPI- oder SCI-, CAN-, RS-232-, PC- oder ISO 9018.3-Schnittstellen ausgebildet.

Der entschlüsselte Programmkode EPC kann paketweise das Programm in dem Speicher 5 und/oder das weitere Programm in dem weiteren Speicher 6 ersetzen, d.h. ein Paket des entschlüsselten Programmkodes EPC wird an die diesem Paket zugeordnete Adresse in dem jeweiligen Speicher gespeichert, insbesondere neuprogrammiert. Dazu kann es erforderlich sein, einen dem Programm zugeordneten Speicherbereich in dem jeweiligen Speicher zuvor zumindest teilweise zu löschen.

Das paketweise Ersetzen des Programms und/oder des weiteren Programms durch den entsprechenden entschlüsselten Programmkode EPC hat den Vorteil, dass ein Speicherbedarf sehr gering ist und eine Aktualisierung besonders schnell erfolgen kann. Ist allerdings die Verifikation der Signatur erfolglos, wird dies auch dem Applikationscontroller 2 mitgeteilt. Der Sicherheitscontroller 3 und der Applikationscontroller 2 sind jeweils ausgebildet, nur dann den ersetzten Programmkode auszuführen oder zur Ausführung freizugeben, wenn die Verifikation erfolgreich ist und andernfalls eine Ausführung zu blockieren. Dadurch wird verhindert, dass Programmkode ausgeführt wird, dessen erforderliche Authentizität und/oder Integrität nicht erfolgreich verifiziert wurde und somit nicht vertrauenswürdig ist. Solange in diesem Fall kein vertrauenswürdiger Programmkode bereitgestellt wird, verbleiben der Sicherheitscontroller 3 und/oder der Applikationscontroller 2 in einem Blockadebetrieb in dem lediglich Kommunikationsprogramme, Entschlüsselungsprogramme und/oder Speicherverwaltungsprogramme ausführbar sind, aber nicht das Programm und/oder das weitere Programm in dem jeweiligen Speicher.

Alternativ oder zusätzlich kann der entschlüsselte Programmkode EPC zunächst komplett in dem Sicherheitscontroller 3 oder in dem Applikationscontroller 2 zwischengespeichert werden, so z.B. in einem jeweiligen RAM-Speicher. In diesem Fall kann das Programm in dem Speicher 5 und/oder das weitere Programm in dem weiteren Speicher 6 erst durch den entschlüsselten Programmkode EPC ersetzt werden, wenn die Verifikation erfolgreich ist. Dies hat den Vorteil, dass das bisherige Programm und/oder das bisherige weitere Programm solange in dem jeweiligen Speicher gespeichert ist, bis diese durch einen entsprechenden vertrauenswürdigen Programmkode ersetzt werden. Bei einer erfolglosen Verifikation kann der zwischengespeicherte Programmkode gelöscht werden und unberücksichtigt bleiben. Das bisherige Programm und das bisherige weitere Programm bleiben somit unverändert und können weiterhin ausgeführt werden. Somit bleibt der Tachograph 1 auch dann voll funktionsfähig, wenn versucht wird, einen nichtvertrauenswürdigen Programmkode in den Applikationscontroller 2 und/oder den Sicherheitscontroller 3 zu übertragen. In einer weiteren Ausführungsform kann das externe Gerät 4 auch direkt mit der weiteren Schnittstelle 8 des Sicherheitscontrollers 3 elektrisch gekoppelt sein, um eine Kommunikation zu ermöglichen und um den verschlüsselten und mit der Signatur versehenen Programmkode DPC dem Sicherheitscontroller 3 direkt bereitzustellen. Der Sicherheitscontroller 3 kann für diesen Zweck aber auch eine weitere zusätzliche Schnittstelle aufweisen.

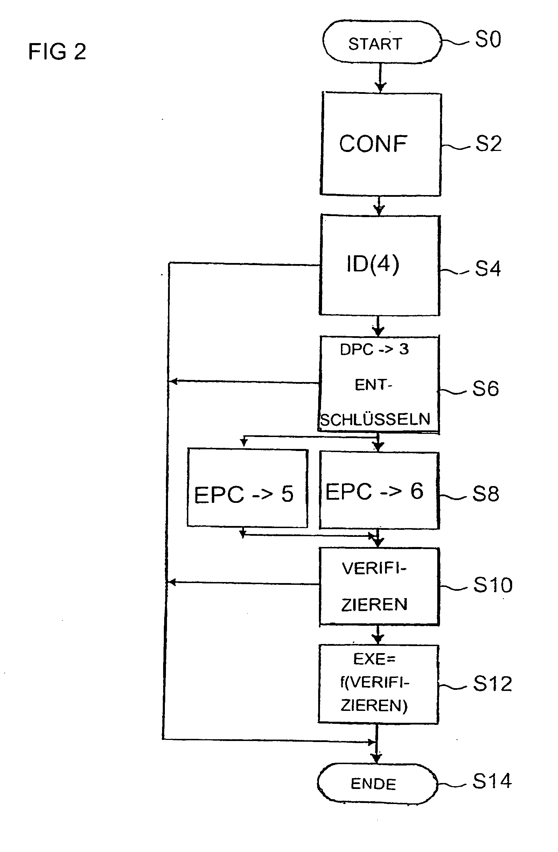

In Fig. 2 ist ein Verfahren zum Betreiben des Tachographen 1 anhand eines Flussdiagramms dargestellt. Das Verfahren wird in einem Schritt S0 gestartet. In einem Schritt S2 wird eine Konfiguration CONF ausgeführt, die beispielsweise die Schnittstelle 7, 8 konfiguriert, so dass durch das externe Gerät 4 der verschlüsselte Programmkode DPC zur Verfügung gestellt werden kann. Ferner kann die Verbindung zwischen dem externen Gerät 4 und der jeweiligen Schnittstelle hergestellt werden. Ist der Sicherheitscontroller 3 dafür ausgebildet, kann alternativ auch eine Kommunikation zwischen dem Sicherheitscontroller 3 und dem externen Gerät 4 konfiguriert werden.

In einem Schritt S4 wird mittels des Sicherheitscontrollers 3 direkt oder über die Schnittstelle 7 des Applikationscontrollers 2 das externe Gerät 4 selbst identifiziert und/oder authentifiziert. Das externe Gerät 4 kann somit auch als Quelle des verschlüsselten Programmkodes DPC bezeichnet werden. Ist die Identifikation ID und/oder Authentifizierung des externen Gerätes 4 erfolglos, wird die Aktualisierung in einem Schritt S14 beendet. Wird dagegen das externe Gerät 4 erfolgreich identifiziert und/oder authentifiziert, wird in einem Schritt S6 der verschlüsselte Programmkode DPC dem Sicherheitscontroller 3 zur Verfügung gestellt und mittels diesem entschlüsselt und bestimmt, welchem Controller 2, 3 der entschlüsselte Programmkode EPC zuzuordnen ist. Dem verschlüsselten Programmkode DPC können auch verschlüsselte oder entschlüsselte Kopfdaten zugeordnet sein, die vor der Entschlüsselung DECRYPT des verschlüsselten Programmkodes DPC ausgewertet werden, so z.B. durch den Applikationscontroller 2 und/oder dem Sicherheitscontroller 3. Im Rahmen dieser Kopfdaten-Überprüfung können beispielsweise Versionsnummern des Programmkodes mit Versionsnummern der bisherigen Programme verglichen werden. Ist die Kopfdaten-Überprüfung erfolglos, wird die Aktualisierung in dem Schritt S14 beendet. Andernfalls wird abhängig von der Detektierung des Ziels des Programmkodes, der entschlüsselte Programmkode EPC in einem Schritt S8 dem weiteren Speicher 6 zugeführt und/oder in einem Schritt S9 über die Schnittstelle 7 dem Speicher 5 des Applikationscontrollers 2 zur Verfügung gestellt. Dabei kann der entschlüsselte Programmkode EPC paketweise das jeweilige Programm in dem jeweiligen Speicher ersetzen. Der verschlüsselte oder entschlüsselte Programmkode DPC, EPC kann auch komplett in dem jeweiligen Controller zwischengespeichert werden.

In einem Schritt S10 wird dann die Signatur mittels des Sicherheitscontrollers 3 verifiziert. Ist die Verifikation VERIFY erfolglos, wird die Aktualisierung in dem Schritt S14 beendet. Der zwischengespeicherte Programmkode kann im Schritt S10 gelöscht werden und dem Sicherheitscontroller 3 und/oder dem Applikationscontroller 2 kann der Blockadebetrieb vorgegeben werden. Alternativ kann die Aktualisierung bei erfolgloser Verifikation VERIFY in dem Schritt S2 oder S4 erneut ausgeführt werden.

Ist die Verifikation VERIFY dagegen erfolgreich, wird in einem Schritt S12 eine Ausführung EXE des jeweiligen ersetzten Programms freigegeben oder das jeweilige Programm durch den zwischengespeicherten Programmkode ersetzt und danach zur Ausführung EXE freigegeben. In dem Schritt S14 wird die Aktualisierung beendet. Die Verifikation der Signatur kann auch schon in dem Schritt S6 ausgeführt werden, wobei dann der Schritt S10 zu ignorieren ist.

Das externe Gerät 4 kann dem Applikationscontroller 2 oder dem Sicherheitscontroller 3 auch einen nichtverschlüsselten oder teilweise verschlüsselten Programmkode zur Verfügung stellen.

## Patentansprüche

1. Verfahren zum Betreiben eines Tachographen (1) mit einem Applikationscontroller (2) und einem Sicherheitscontroller (3), wobei dem Applikationscontroller (2) ein Speicher (5) zugeordnet ist, in dem ein von dem Applikationscontroller (2) ausführbares Programm gespeichert ist, und dem Sicherheitscontroller (3) ein weiterer Speicher (6) zugeordnet ist, in dem ein von dem Sicherheitscontroller (3) ausführbares weiteres Programm gespeichert ist, wobei der Applikationscontroller (2) mit dem Sicherheitscontroller (3) in Verbindung steht, bei dem
- ein verschlüsselter Programmkode (DPC) mit zumindest einer zugeordneten Signatur dem Sicherheitscontroller (3) zur Verfügung gestellt wird,
- mittels des Sicherheitscontrollers (3) der verschlüsselte Programmkode (DPC) entschlüsselt und mittels der zumindest einen Signatur verifiziert wird,
- detektiert wird, ob der entschlüsselte Programmkode (EPC) für den Applikationscontroller (2) und/oder für den Sicherheitscontroller (3) bestimmt ist,
- abhängig von der Detektierung das Programm in dem Speicher (5) und/oder das weitere Programm in dem weiteren Speicher (6) durch den entschlüsselten Programmkode (EPC) zumindest teilweise ersetzt und abhängig von einem Ergebnis der Verifikation das zumindest teilweise ersetzte Programm und/oder das zumindest teilweise ersetzte weitere Programm zur Ausführung freigegeben wird.

2. Verfahren nach Anspruch 1, bei dem
- mittels des Sicherheitscontrollers (3) eine Quelle (4) des verschlüsselten Programmkodes (DPC) identifiziert und/oder authentifiziert wird,
- abhängig von der Identifizierung und/oder Authentifizierung der verschlüsselte Programmkode (DPC) dem Sicherheitscontroller (3) bereitgestellt wird.

3. Verfahren nach Anspruch 1 oder 2, bei dem
- der entschlüsselte Programmkode (EPC) in dem Applikationscontroller (2) und/oder dem Sicherheitscontroller (3) zwischengespeichert wird,
- das Programm in dem Speicher (5) und/oder das weitere Programm in dem weiteren Speicher (6) durch den zwischengespeicherten entschlüsselten Programmkode (EPC) ersetzt werden, wenn die Verifikation erfolgreich ist.

4. Verfahren nach Anspruch 1 oder 2, bei dem
- der verschlüsselte Programmkode (DPC) paketweise mittels des Sicherheitscontrollers (3) entschlüsselt wird,
- das Programm in dem Speicher (5) und/oder das weitere Programm in dem weiteren Speicher (6) paketweise durch den entsprechenden paketweise entschlüsselten Programmkode (EPC) ersetzt werden,
- das zumindest teilweise ersetzte Programm und/oder das zumin-dest teilweise ersetzte weitere Programm zur Ausführung freigegeben werden, wenn die Verifikation erfolgreich ist.

5. Tachograph (1) mit einem Applikationscontroller (2) und einem Sicherheitscontroller (3), wobei dem Applikationscontroller (2) ein Speicher (5) zugeordnet ist, in dem ein von dem Applikationscontroller (2) ausführbares Programm gespeichert ist, und dem Sicherheitscontroller (3) ein weiterer Speicher (6) zugeordnet ist, in dem ein von dem Sicherheitscontroller (3) ausführbares weiteres Programm gespeichert ist, wobei der Applikationscontroller (2) mit dem Sicherheitscontroller (3) in Verbindung steht, bei dem
- der Sicherheitscontroller (3) ausgebildet ist,
-- einen ihm zur Verfügung gestellten verschlüsselten Programmkode (DPC), der zumindest eine dem Programmkode zugeordnete Signatur umfasst, zu entschlüsseln und mittels der zumindest einen Signatur zu verifizieren,
-- zu detektieren, ob der entschlüsselte Programmkode (EPC) für den Sicherheitscontroller (3) und/oder für den Applikationscontroller (2) bestimmt ist,
-- abhängig von der Detektierung das weitere Programm in dem weiteren Speicher (6) durch den entschlüsselten Programmkode (EPC) zumindest teilweise zu ersetzen und abhängig von einem Ergebnis der Verifikation das zumindest teilweise ersetzte weitere Programm zur Ausführung freizugeben und/oder den entschlüsselten Programmkode (EPC) und das Ergebnis der Verifikation dem Applikationscontroller (2) bereitzustellen,
- der Applikationscontroller (2) ausgebildet ist,
-- abhängig von dem zur Verfügung stehenden entschlüsselten Programmkode (EPC) das Programm in dem Speicher (5) durch den entschlüsselten Programmkode (EPC) zumindest teilweise zu ersetzen,
-- abhängig von dem zur Verfügung stehenden Ergebnis der Verifikation, das zumindest teilweise ersetzte Programm in dem Speicher (5) zur Ausführung freizugeben.

6. Tachograph nach Anspruch 5, bei dem der Sicherheitscontroller (3) ausgebildet ist, eine Quelle (4) des verschlüsselten Programmkodes (DPC) zu identifizieren und/oder zu authentifizieren und davon abhängig den verschlüsselten Programmkode (DPC) zu entschlüsseln und zu verifizieren.

7. Tachograph nach Anspruch 5 oder 6, bei dem der Sicherheitscontroller (3) ausgebildet ist, den entschlüsselten Programmkode (EPC) zwischenzuspeichern und abhängig von der Detektierung das weitere Programm in dem weiteren Speicher (6) durch den zwischengespeicherten entschlüsselten Programmkode (EPC) zumindest teilweise zu ersetzen, wenn die Verifikation erfolgreich ist, und/oder den zwischengespeicherten entschlüsselten Programmkode (EPC) dem Applikationscontroller (2) bereitzustellen, wenn die Verifikation erfolgreich ist.

8. Tachograph nach einem der Ansprüche 5 bis 7, bei dem der Applikationscontroller (2) ausgebildet ist, den bereitgestellten entschlüsselten Programmkode (EPC) zwischenzuspeichern und das Programm in dem Speicher (5) durch den zwischengespeicherten entschlüsselten Programmkode (EPC) zumindest teilweise zu ersetzen, wenn ein positives Ergebnis der Verifikation anliegt.

9. Tachograph nach einem der Ansprüche 5 bis 7, bei dem der Sicherheitscontroller (3) ausgebildet ist, den verschlüsselten Programmkode (DPC) paketweise zu entschlüsseln und das weitere Programm in dem weiteren Speicher (6) paketweise zu ersetzen und das zumindest teilweise ersetzte weitere Programm zur Ausführung freizugeben, wenn die Verifikation erfolgreich ist, und/oder den paketweise entschlüsselten Programmkode (EPC) paketweise dem Applikationscontroller (2) bereitzustellen.

10. Tachograph nach Anspruch 9, bei dem der Applikationscontroller (2) ausgebildet ist, das Programm in dem Speicher (5) durch den paketweise bereitgestellten entschlüsselten Programmkode (EPC) zu ersetzen und das zumindest teilweise ersetzte Programm zur Ausführung freizugeben, wenn ein positives Ergebnis der Verifikation anliegt.

## Claims

1. Method for operating a tachograph (1) having an application controller (2) and a security controller (3), wherein the application controller (2) has an associated memory (5) which stores a program which can be executed by the application controller (2), and the security controller (3) has an associated further memory (6) which stores a further program which can be executed by the security controller (3), wherein the application controller (2) is connected to the security controller (3), in which
- an encrypted program code (DPC) having at least one associated signature is made available to the security controller (3),
- the security controller (3) is used to decrypt the encrypted program code (DPC) and to verify it using the at least one signature,
- it is detected whether the decrypted program code (EPC) is intended for the application controller (2) and/or for the security controller (3),
- the detection is taken as a basis for at least partly replacing the program in the memory (5) and/or the further program in the further memory (6) with the decrypted program code (EPC), and a result of the verification is taken as a basis for clearing the at least partly replaced program and/or the at least partly replaced further program for execution.

2. Method according to Claim 1, in which
- the security controller (3) is used to identify and/or authenticate a source (4) for the encrypted program code (DPC),
- the identification and/or authentication is/are taken as a basis for providing the security controller (3) with the encrypted program code (DPC).

3. Method according to Claim 1 or 2, in which
- the decrypted program code (EPC) is buffer-stored in the application controller (2) and/or the security controller (3),
- the program in the memory (5) and/or the further program in the further memory (6) is/are replaced by the buffer-stored decrypted program code (EPC) if the verification is successful.

4. Method according to Claim 1 or 2, in which
- the encrypted program code (DPC) is decrypted on a packet by packet basis using the security controller (3),
- the program in the memory (5) and/or the further program in the further memory (6) is/are replaced on a packet by packet basis by the relevant program code decrypted on a packet by packet basis (EPC),
- the at least partly replaced program and/or the at least partly replaced further program is/are cleared for execution if the verification is successful.

5. Tachograph (1) having an application controller (2) and a security controller (3), wherein the application controller (2) has an associated memory (5) which stores a program which can be executed by the application controller (2), and the security controller (3) has an associated further memory (6) which stores a further program which can be executed by the security controller (3), wherein the application controller (2) is connected to the security controller (3), in which
- the security controller (3) is designed
-- to decrypt an encrypted program code (DPC) which has been made available to it, and which comprises at least one signature associated with the program code, and to verify it using the at least one signature,
-- to detect whether the decrypted program code (EPC) is intended for the security controller (3) and/or for the application controller (2),
-- to take the detection as a basis for at least partly replacing the further program in the further memory (6) with the decrypted program code (EPC) and to take a result of the verification as a basis for clearing the at least partly replaced further program for execution and/or for providing the application controller (2) with the decrypted program code (EPC) and the result of the verification,
- the application controller (2) is designed
-- to take the available decrypted program code (EPC) as a basis for at least partly replacing the program in the memory (5) with the decrypted program code (EPC),
-- to take the available result of the verification as a basis for clearing the at least partly replaced program in the memory (5) for execution.

6. Tachograph according to Claim 5, in which the security controller (3) is designed to identify and/or authenticate a source (4) for the encrypted program code (DPC) and to take this as a basis for decrypting and verifying the encrypted program code (DPC).

7. Tachograph according to Claim 5 or 6, in which the security controller (3) is designed to buffer-store the decrypted program code (EPC) and to take the detection as a basis for at least partly replacing the further program in the further memory (6) with the buffer-stored decrypted program code (EPC) if the verification is successful and/or to provide the application controller (2) with the buffer-stored decrypted program code (EPC) if the verification is successful.

8. Tachograph according to one of Claims 5 to 7, in which the application controller (2) is designed to buffer-store the provided decrypted program code (EPC) and to at least partly replace the program in the memory (5) with the buffer-stored decrypted program code (EPC) if there is a positive result from the verification.

9. Tachograph according to one of Claims 5 to 7, in which the security controller (3) is designed to decrypt the encrypted program code (DPC) on a packet by packet basis and to replace the further program in the further memory (6) on a packet by packet basis and to clear the at least partly replaced further program for execution if the verification is successful and/or to provide the application controller (2) with the program code decrypted on a packet by packet basis (EPC) on a packet by packet basis.

10. Tachograph according to Claim 9, in which the application controller (2) is designed to replace the program in the memory (5) with the decrypted program code provided on a packet by packet basis (EPC) and to clear the at least partly replaced program for execution if there is a positive result from the verification.

## Revendications

1. Procédé pour faire fonctionner un tachographe (1) par un pilote (2) d'application et par un pilote (3) de sécurité, une mémoire (5), dans laquelle est mémorisé un programme pouvant être exécuté par le pilote (2) d'application, étant associée au pilote (2) d'application et une autre mémoire (6), dans laquelle est mémorisé un autre programme pouvant être exécuté par le pilote (5) de sécurité, étant associée au pilote (3) de sécurité, le pilote (2) d'application étant en liaison avec le pilote (3) de sécurité, dans lequel
- on met à disposition du pilote (3) de sécurité un code (DPC) de programme chiffré ayant au moins une signature associée,
- on déchiffre le code (DPC) de programme chiffré au moyen du pilote de sécurité et on le vérifie au moyen de la au moins une signature,
- on détecte si le code (EPC) de programme déchiffré est destiné au pilote (2) d'application et/ou au pilote (3) de sécurité,
- en fonction de la détection, on remplace, au moins en partie, par le code (EPC) de programme déchiffré, le programme dans la mémoire (5) et/ou l'autre programme dans l'autre mémoire (6) et, en fonction d'un résultat de la vérification, on libère, pour qu'il soit exécuté, le programme remplacé au moins en partie et/ou l'autre programme remplacé au moins en partie.

2. Procédé suivant la revendication 1, dans lequel
- au moyen du programme (3) de sécurité, on identifie et/ou on authentifie une source (4) du code (DPC) de programme chiffré,
- en fonction de l'identification et/ou de l'authentification, on met le code (DPC) de programme chiffré à disposition du pilote (3) de sécurité.

3. Procédé suivant la revendication 1 ou 2, dans lequel
--on met le code (EPC) de programme déchiffré en mémoire tampon dans le pilote (2) d'application et/ou dans le pilote (3) de sécurité,
--on remplace le programme dans la mémoire (5) et/ou l'autre programme dans l'autre mémoire (6) par le code (EPC) de programme déchiffré, mis en mémoire tampon, si la vérification est couronnée de succès.

4. Procédé suivant la revendication 1 ou 2, dans le quel
- on déchiffre le code (DPC) de programme chiffré paquet par paquet au moyen du pilote (3) de sécurité,
- on remplace le programme dans la mémoire (5) et/ ou l'autre programme dans la mémoire (6) paquet par paquet par le code (EPC) de programme déchiffré paquet par paquet correspondant,
- on libère, pour qu'il soit exécuté, le programme remplacé au moins en partie et/ou l'autre programme remplacé au moins en partie, si la vérification est couronnée de succès.

5. Tachographe (1) ayant un pilote (2) d'application et un pilote (3) de sécurité, une mémoire (5), dans laquelle un programme pouvant être réalisé par le pilote (2) d'application est mémorisé, étant associée au pilote (2) d'application, et une autre mémoire (6), dans laquelle un autre programme pouvant être exécuté par le pilote (3) de sécurité est mémorisé, étant associée au pilote (3) de sécurité, le pilote (2) d'application étant en liaison avec le pilote (3) de sécurité, dans lequel
- le pilote (3) de sécurité est constitué
--pour déchiffrer un code (DPC) de programme chiffré mis à sa disposition et ayant au moins une signature associée au code de programme et pour le vérifier au moyen de la au moins une signature,
--pour détecter si le code (EPC) de programme déchiffré est destiné au pilote (3) de sûreté et/ou au pilote (2) d'application,
--pour, en fonction de la détection, remplacer au moins en partie l'autre programme dans l'autre mémoire (6) par le code (EPC) de programme déchiffré et, en fonction d'un résultat de la vérification, libérer, pour qu'il soit exécuté, l'autre programme remplacé au moins en partie et/ou mettre à disposition du pilote (2) d'application le code (EPC) de programme déchiffré et le résultat de la vérification,
- le pilote (2) d'application est constitué
--pour, en fonction du code (EPC) de programme déchiffré mis à disposition, remplacer au moins en partie le programme dans la mémoire (5) par le code (EPC) de programme déchiffré,
--pour, en fonction du résultat de la vérification mis à disposition, libérer, pour qu'il soit exécuté, le programme remplacé au moins en partie dans la mémoire (5).

6. Tachographe suivant la revendication 5, dans lequel le pilote (3) de sécurité est constitué pour identifier et/ou authentifier une source (4) du code (DPC) de programme chiffré, et, en fonction de cela, déchiffrer et vérifier le code (DPC) de programme chiffré.

7. Tachographe suivant la revendication 5 ou 6, dans lequel le pilote (3) de sécurité est constitué pour mettre en mémoire tampon le code (EPC) de programme déchiffré et, en fonction de la détection, remplacer au moins en partie l'autre programme dans l'autre mémoire (6) par le code (EPC) de programme déchiffré mis en mémoire tampon, si la vérification est couronnée de succès et/ou mettre à dispositif du pilote (2) d'application le code (EPC) de programme déchiffré mis en mémoire tampon, si la vérification est couronnée de succès.

8. Tachographe suivant l'une des revendications 5 à 7, dans lequel le pilote (2) d'application est constitué pour mettre le code (EPC) de programme déchiffré en mémoire tampon et pour remplacer au moins en partie le programme dans la mémoire (5) par le code (EPC) de programme déchiffré mis en mémoire tampon, si la vérification donne un résultat positif.

9. Tachographe suivant l'une des revendications 5 à 7, dans lequel le pilote (3) de sécurité est constitué pour déchiffrer paquet par paquet le code (DPC) de programme chiffré et pour remplacer paquet par paquet l'autre programme dans l'autre mémoire (6) et libérer, pour qu'il soit exécuté, l'autre programme remplacé au moins en partie, si la vérification est couronnée de succès et/ou mettre à disposition du pilote (2) d'application paquet par paquet le code (EPC) de programme déchiffré paquet par paquet.

10. Tachographe suivant la revendication 9, dans lequel le pilote (2) d'application est constitué pour remplacer le programme dans la mémoire (5) par le code (EPC) de programme déchiffré mis à disposition paquet par paquet et libérer, pour qu'il soit exécuté, le programme remplacé au moins en partie, si la vérification donne un résultat positif.
